# FASCICULE DE BREVET EUROPEEN

(11) **EP 1 099 864 B1**
(45) Date de publication et mention de la délivrance du brevet: **16.06.2004**
(21) Numéro de dépôt: 00403125.8
(22) Date de dépôt: 10.11.2000
(51) Int. Cl.: F16B 15/02, F16B 5/04, F16B 19/14

(54) **Embase de fixation d'une pièce perforée à un support**
Montageplatte zum Befestigen eines perforierten Teils auf einer Unterlage
Base plate for fastening a perforated element to a support

(30) Priorité: 10.11.1999 FR 9914131
(43) Date de publication de la demande: 16.05.2001
(73) Titulaire: SOCIETE DE PROSPECTION ET D'INVENTIONS TECHNIQUES SPIT, 26501 Bourg-Les-Valence Cédex (FR)
(72) Inventeur: Gonnet, Louis, 07300 Saint Jean de Muzols (FR)
(74) Mandataire: Bloch, Gérard

(56) Documents cités:
- EP-A- 0 930 442
- DE-C- 4 327 436
- US-A- 5 688 092

## Description

L'invention concerne une embase de fixation d'une pièce perforée à un support, comprenant des moyens de réception de la pièce à fixer et des moyens de fixation au support.

L'invention concerne plus particulièrement une embase de fixation d'une pièce perforée, comportant des moyens d'appui, par exemple une surface avant, destinés à être appliqués contre la pièce à fixer, et des moyens de réception d'un tampon de fixation. Généralement, l'embase comprend également des moyens de solidarisation à l'extrémité du guide-tampon, ou nez, d'un appareil de fixation de tampon.

Pour fixer une pièce, telle qu'une goulotte perforée, à un support, on solidarise l'embase et le nez de l'appareil de fixation et, après mise en place de la goulotte contre le support, on applique l'embase contre la goulotte, en la positionnant au droit d'un trou, préalablement ménagé dans la goulotte, puis, à l'aide de l'appareil, on tire un tampon. Le tampon, projeté vers l'avant, traverse l'embase, le trou de la goulotte et pénètre dans le support, puis sa tête vient en butée contre l'embase. Après fixation du tampon, la goulotte est pincée entre le support et l'embase est ainsi maintenue fixement contre le support.

Pour assurer une fixation correcte, il convient de positionner correctement l'embase au droit d'un trou de la goulotte, de telle sorte que les axes centraux respectifs du tampon, traversant l'embase, et du trou de la goulotte se confondent sensiblement. En cas de mauvais positionnement, le tampon risque d'éclater la goulotte. En outre, il existe un risque non négligeable d'éclatement de la goulotte et/ou de l'embase, lors de la fixation, sous l'action de la frappe du tampon contre l'embase.

La présente invention vise à réduire fortement ce risque d'éclatement de la goulotte et de l'embase, lors d'un tir.

A cet effet, l'invention concerne une embase de fixation d'une pièce perforée à un support selon la revendication 1.

Grâce à cela, on positionne facilement l'embase, par introduction du téton d'amortissement et de positionnement dans un trou de la pièce à fixer.

Avantageusement, le téton d'amortissement est compressible.

Lors du tir, le téton d'amortissement s'écrase contre le support, sous l'action de la frappe du tampon, en amortissant ainsi le choc.

De préférence, un passage de tampon de fixation y étant prévu, le passage s'étend au travers du téton d'amortissement qui est annulaire.

De préférence, la section transversale externe du téton d'amortissement se rétrécit vers l'avant.

Grâce à cela, il est plus facile d'introduire le téton dans le trou, en outre, cela permet au téton d'amortissement de venir se loger dans le trou de la pièce à fixer, après écrasement.

L'invention sera mieux comprise à l'aide de la description suivante de l'embase de fixation de l'invention, en référence au dessin annexé sur lequel :
- la figure 1 représente une vue de côté de l'embase de fixation de l'invention, selon une forme de réalisation particulière de l'invention, avant fixation ;
- la figure 2 représente une vue arrière de l'embase de la figure 1 ;
- la figure 3 représente une vue de côté de l'embase de la figure 1, après fixation.

L'embase de fixation de l'invention permet de fixer une pièce perforée à un support, l'opération de fixation s'effectuant à l'aide d'un appareil de fixation de tampon.

D'emblée, on notera que l'avant désigne la direction dans laquelle le tampon est projeté lors d'un tir.

L'embase comprend une partie d'appui 1 et une cheminée 5 de réception et de guidage d'un tampon, ou clou, de fixation 10. La partie d'appui 1 et la cheminée 5 sont d'axe 2.

La partie d'appui 1 présente une section transversale externe circulaire. Elle comprend une surface avant d'appui 3, perpendiculaire à l'axe 2, et une coupelle, ou cuvette, arrière 4 d'amortissement, creusée dans la surface arrière de la partie d'appui 1.

La coupelle 4 comprend une paroi latérale globalement cylindrique 4a, d'axe 2, et une paroi de fond 4b s'étendant dans un plan perpendiculaire à l'axe 2.

Le rebord arrière 7 de la coupelle 4 constitue une surface de butée de l'extrémité du guide-tampon de l'appareil de fixation.

La cheminée 5 fait saillie vers l'arrière hors de la paroi de fond 4b de la coupelle 4. Elle comprend un alésage central 6, d'axe 2, de passage du tampon 10. L'alésage 6 s'étend vers l'avant et traverse la partie d'appui 1. La cheminée 5 supporte, sur sa surface externe, une pluralité d'ailettes radiales 5a-5d, ici au nombre de quatre, de solidarisation à l'extrémité du guide-tampon, s'étendant dans des plans contenant l'axe 2 et angulairement décalées l'une de l'autre d'un angle de 90°.

La cheminée 5 et les ailettes 5a-5d sont constitués en matériau compressible et destinés à être comprimés sous l'action de frappe de la tête du tampon, lors d'un tir, et à amortir ainsi le tampon.

L'embase est destinée à être solidarisée à l'extrémité du guide-tampon d'un appareil de fixation de tampon adapté, par introduction de la cheminée 5 et des ailettes 5a-5d dans l'extrémité du guide-tampon, juqu'à ce que cette extrémité vienne en butée contre le rebord arrière 7 de la coupelle 4. Lors de l'introduction de la cheminée 5 et des ailettes 5a-5d dans l'extrémité du guide-tampon, les ailettes 5a-5d viennent en appui forcé contre la paroi intérieure de l'extrémité du guide-tampon, en fléchissant latéralement, et immobilisent ainsi, par friction, l'embase dans l'extrémité du guide-tampon. Les ailettes 5a-5d sont ainsi destinées à guider l'embase et à la solidariser à l'extrémité du guide-tampon.

La coupelle 4 fait fonction de logement de réception de la cheminée 5, comprimée sous l'action de la frappe de la tête du tampon lors d'un tir, et participe de ce fait à l'amortissement du choc induit par la frappe du tampon contre l'embase.

L'embase comprend en outre un téton 8 d'amortissement et ici de positionnement de l'embase. Le téton 8, de forme externe tronconique et ici annulaire et d'axe 2, fait saillie vers l'avant hors de la surface d'appui 3, la section transversale externe du téton 8 se rétrécissant vers l'avant. La section transversale externe la plus grande du téton 8, c'est-à-dire celle de la base du téton 8, de jonction avec la surface d'appui 3, est sensiblement inférieure à la section du trou de réception du téton, de telle manière que l'introduction du téton 8 dans le trou s'effectue avec un léger jeu. L'alésage 6 de passage du tampon s'étend au travers du téton 8. Le téton 8 est en matériau compressible et sa hauteur, le long de l'axe 2, est légèrement supérieure à la hauteur correspondante du trou de la pièce à fixer.

Ce téton annulaire 8 a deux fonctions. D'une part, lors de la fixation d'une pièce perforée, il permet de positionner correctement l'embase, par introduction du téton 8 dans un trou de fixation traversant la pièce à fixer. D'autre part, lors du tir, le téton 8 est destiné à être comprimé axialement contre le support et à se loger dans le trou, en participant ainsi à l'amortissement du choc induit par la frappe du tampon contre l'embase.

Après la description structurelle et fonctionnelle de l'embase, l'opération de fixation d'une pièce perforée, ici une goulotte 20, sur un support 30, en l'espèce un plafond, à l'aide de l'embase et d'un tampon de fixation 10, va maintenant être décrite. La fixation est réalisée à l'aide d'un appareil de fixation de tampon comportant une extrémité, ou un "nez", de guide-tampon, agencée pour recevoir la cheminée 5 et les ailettes 5a-5d.

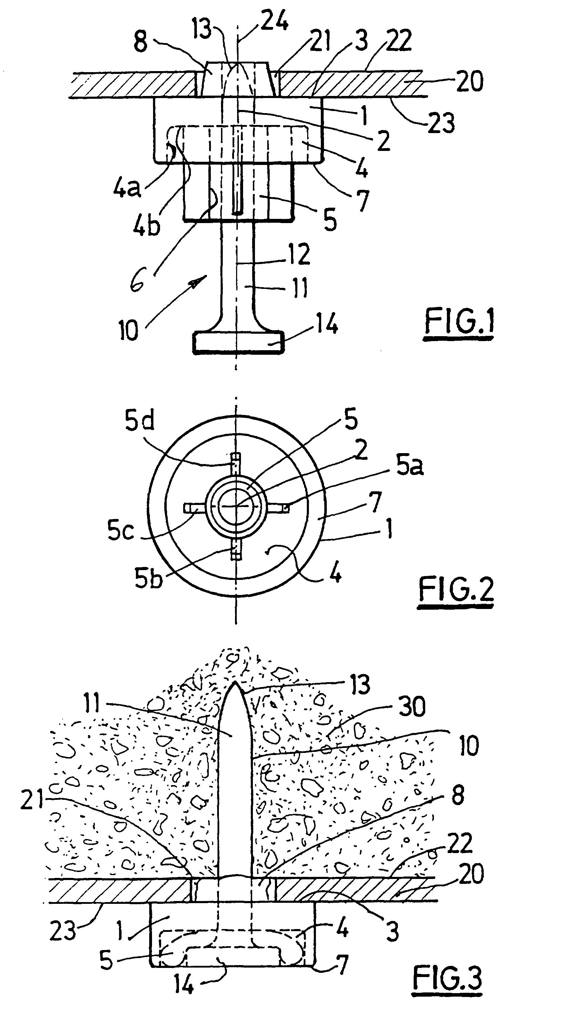

La goulotte 20 comprend une plaque comportant une surface avant 22, destinée à être accolée contre le support 30, une surface arrière 23 et une pluralité de trous traversants 21, de forme cylindrique et d'axe 24. L'un seul de ces trous 21 est représenté sur les figures 1 et 3. Les deux surfaces avant 22 et arrière 23 sont parallèles entre elles et perpendiculaires aux axes 24 des trous 21 de la goulotte 20.

### 1- Solidarisation de l'embase et de l'extrémité du guide-tampon

Afin de solidariser l'embase et l'extrémité du guide-tampon de l'appareil de fixation, on introduit la cheminée 5 et ses ailettes 5a-5d dans l'extrémité du guide-tampon, par un mouvement de translation relative de l'embase et du guide-tampon, parallèlement à l'axe 2, jusqu'à ce que l'extrémité du guide-tampon vienne en butée contre le rebord arrière 7 de la coupelle 4.

### 2- Positionnement de l'embase

On positionne ensuite l'embase au droit d'un trou 21 de la goulotte 20, par introduction du téton 8 dans le trou 21. On met en appui l'embase contre la goulotte 20, en accolant la surface avant d'appui 3 contre la surface arrière 23 de la goulotte 20. Dans cette position, la grande base du téton 8, de section transversale sensiblement inférieure à celle du trou 21, coopère avec le bord de l'ouverture arrière d'introduction du trou 21 afin de positionner latéralement l'embase, de telle sorte que l'axe 2 de l'embase et l'axe 24 du trou 21 se confondent sensiblement. En outre, le téton 8 fait légèrement saillie vers l'avant, en dehors du trou 21. Du fait de la forme tronconique du téton 8, il reste, à l'intérieur du trou 21, un espace vide, non occupé par le téton 8, destiné à recevoir le téton 8 comprimé, comme cela sera explicité plus loin.

Puis on met en appui l'extrémité avant du téton 8 contre le plafond 30, les axes 2 et 24 s'étendant ici sensiblement verticalement et l'avant de l'embase étant dirigé vers le haut.

### 3- Fixation de l'embase au support

Pour fixer l'embase au support 30, on tire un tampon 10 de fixation à l'aide de l'appareil.

Le tampon 10 comprend une tige 11, d'axe 12, comportant, à l'avant, une extrémité libre pointue de perçage 13 et prolongée, à l'arrière, par une tête 14. La section transversale de la tige 11 est sensiblement égale à celle de l'alésage 6. En revanche, la section transversale de la tête 14 est supérieure à celle de l'alésage 6.

Lors du tir, le tampon 10 est projeté vers l'avant. Son extrémité pointue 13 et une partie de sa tige 11 traversent l'embase, par passage à travers l'alésage 6, et pénètrent dans le support 30. Puis la tête 14 du tampon 10 vient buter contre le bord arrière de la cheminée 5, en comprimant axialement la cheminée 5 et ses ailettes 5a-5d, sous l'action de la frappe. Ces éléments 5, 5a-5d, écrasés, comprimés, viennent se loger dans la coupelle 4, tout comme la tête 14 du tampon qui n'en fait pas saillie, la profondeur de la coupelle 4 étant ainsi égale au moins à la somme de la hauteur, ou épaisseur, de la tête de tampon 14 et de l'épaisseur de la portion centrale de la cheminée 5 comprimée entre le fond 4b de la coupelle et la tête de tampon 14.

Sous l'action de la frappe de la tête 14 du tampon 10 contre l'embase, la goulotte 20 est plaquée contre le plafond 30, de telle sorte que le téton 8 s'écrase, sous un effort de compression axiale, et vient se loger dans le trou 21. La goulotte 20 est alors en appui, à l'avant, contre le plafond 30 et, à l'arrière, contre la surface d'appui 3 de l'embase. En d'autres termes, les surfaces avant 22 et arrière 23 de la goulotte 20 sont respectivement accolées contre le plafond 30 et contre la surface d'appui 3 de l'embase. Après fixation du tampon 10 dans le support 30, la goulotte 20 est ainsi maintenue fixement contre le support 30 par l'embase.

Dans la description qui vient d'être faite, lors de l'étape de positionnement, la face arrière 23 de la goulotte 20 est mise en appui contre la face avant d'appui 3 de l'embase, de sorte que le téton 8 fait saillie hors du trou 21 de la goulotte 20 vers l'avant. Il en est ainsi du fait que, l'opération visant à fixer la goulotte 20 à un plafond, on positionne l'axe de l'embase sensiblement verticalement, en orientant l'avant de l'embase vers le plafond, c'est-à-dire vers le haut, de sorte que, par gravité, la goulotte vient en appui contre la surface avant de l'embase. Dans d'autres circonstances, par exemple en cas de fixation de la goulotte au sol ou en cas de support présentant une surface irrégulière, le téton 8 pourrait faire saillie hors du trou 21 de la pièce à fixer 20 vers l'arrière, par sa partie élargie. Dans tous les cas, il conviendra de mettre en appui l'extrémité avant du téton 8 contre le support de fixation.

A la place de la cheminée de solidarisation de l'embase et de l'extrémité du guide-tampon, l'embase pourrait comprendre des moyens de solidarisation à l'extrémité du guide-tampon, de structure différente.

Dans la description qui vient d'être faite, le téton d'amortissement est un tronc de cône en matériau compressible. Le téton pourrait être de forme, ou de structure, différente, mais néanmoins compressible.

## Revendications

1. Embase de fixation d'une pièce perforée (20) à un support (30), comportant des moyens (6) de réception d'un tampon de fixation (10) et des moyens d'appui (3), destinés à être appliqués contre la pièce à fixer (20), **caractérisée par le fait qu'**elle comprend un téton (8) d'amortissement du choc induit par la frappe du tampon (10) contre l'embase, lors de la fixation, et de positionnement de l'embase par un trou (21) dans la pièce à fixer (20), qui fait saillie hors des moyens d'appui (3).

2. Embase selon la revendication 1, dans laquelle le téton d'amortissement (8) est compressible.

3. Embase selon l'une des revendications 1 et 2, dans laquelle, un passage (6) de tampon de fixation (10) y étant prévu, le passage (6) s'étend au travers du téton d'amortissement (8) qui est annulaire.

4. Embase selon l'une des revendications 1 à 3, dans laquelle la section transversale externe du téton d'amortissement (8) se rétrécit vers l'avant.

5. Embase selon l'une des revendications 1 à 4, dans laquelle les moyens (6) de réception de tampon comprennent une cheminée (5) de guidage et d'amortissement du tampon (10) et il est prévu une coupelle d'amortissement (4), dans laquelle la cheminée (5), comprimée sous l'action de la frappe du tampon (10), est destinée à se loger.

6. Embase selon l'une des revendications 1 à 5, dans laquelle il est prévu des moyens (5, 5a-5d) de solidarisation à l'extrémité d'un guide-tampon d'un appareil de fixation de tampon.

## Patentansprüche

1. Montageplatte zur Befestigung eines perforierten Teils (20) an einer Unterlage (30), mit Mitteln (6) zur Aufnahme eines Befestigungselements (10) und Stützmitteln (3), die gegen das zu befestigende Teil (20) gedrückt werden sollen, **dadurch gekennzeichnet, dass** sie einen Ansatz (8) zur Dämpfung des durch den Schlag des Elements (10) gegen die Montageplatte bei der Befestigung erzeugten Stoßes und zur Positionierung der Montageplatte durch ein Loch (21) in dem zu befestigenden Teil (20) aufweist, der aus den Stützmitteln (3) vorragt.

2. Montageplatte nach Anspruch 1, bei der der Dämpfungsansatz (8) komprimierbar ist.

3. Montageplatte nach Anspruch 1 oder 2, bei der darin ein Durchgang (6) für das Befestigungselement (10) vorgesehen ist, wobei sich der Durchgang (6) durch den ringförmigen Dämpfungsansatz (8) hindurch erstreckt.

4. Montageplatte nach einem der Ansprüche 1 bis 3, bei der der Außenquerschnitt des Dämpfungsansatzes (8) nach vorne hin enger wird.

5. Montageplatte nach einem der Ansprüche 1 bis 4, bei der die Mittel (6) zur Aufnahme des Elements eine Buchse (5) zur Führung und Dämpfung des Elements (10) aufweisen und eine Dämpfungsschale (4) vorgesehen ist, in der die unter der Wirkung des Schlags des Elements (10) komprimierte Buchse (5) aufgenommen werden soll.

6. Montageplatte nach einem der Ansprüche 1 bis 5, bei der Mittel (5, 5a-5d) zur Befestigung am Ende einer Elementführung einer Elementbefestigungsvorrichtung vorgesehen sind.

## Claims

1. Base for fixing a drilled piece (20) to a support (30), including means (6) for reception of a fixing plug (10) and abutment means (3), intended to be applied against the piece to be fixed (20), **characterised by** the fact that it includes a nipple (8) for damping the shock caused by the plug (10) striking against the base, at fixing, and for positioning the base through a hole (21) in the piece to be fixed (20), which projects from the abutment means (3).

2. Base as described in claim 1, in which the damping nipple (8) is compressible.

3. Base as described in one of claims 1 and 2, in which, a passage (6) for the fixing plug (10) being provided in it, the passage (6) extends through the damping nipple (8) which is annular.

4. Base as described in one of claims 1 to 3, in which the external cross-section of the damping nipple (8) becomes smaller towards the front.

5. Base as described in one of claims 1 to 4, in which the plug reception means (6) comprise a conduit (5) for guiding and damping the plug (10) and a damping cup (4) is provided, which will house the conduit (5), compressed under the striking action of the plug (10).

6. Base as described in one of claims 1 to 5, in which means (5, 5a-5d) are provided for attachment to the end of a plug guide of a plug fixing apparatus.
